# EUROPEAN PATENT APPLICATION

(11) **EP 4 571 879 A1**
(43) Date of publication of application: **18.06.2025**
(21) Application number: 23907837.1
(22) Date of filing: 21.12.2023
(51) Int. Cl.: H01M 4/36, H01M 4/525, H01M 4/505, C01G 53/00, H01M 10/052, H01M 4/02

(54) **POSITIVE ELECTRODE ACTIVE MATERIAL, MANUFACTURING METHOD THEREFOR, AND POSITIVE ELECTRODE AND LITHIUM SECONDARY BATTERY COMPRISING SAME**

(30) Priority: 23.12.2022 KR 20220183015
(71) Applicant: LG Energy Solution, Ltd., Seoul 07335 (KR)
(72) Inventor: HEO, Jong Wook, Daejeon 34122 (KR); PARK, Byung Chun, Daejeon 34122 (KR); JO, Chi Ho, Daejeon 34122 (KR); KIM, Ji Hye, Daejeon 34122 (KR); JUNG, Hae Jung, Daejeon 34122 (KR)
(74) Representative: Hoffmann Eitle
(86) International application number: PCT/KR2023/021345
(87) International publication number: WO 2024/136554

(57) **Abstract**

The present invention relates to a positive electrode active material and a preparation method thereof, wherein the positive electrode active material includes a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle, and a coating layer formed on the surface of the secondary particle and including a Co element, wherein the lithium composite transition metal oxide contains nickel and cobalt, and when the ratio of the molar number of cobalt to the molar number of nickel in the grain is C1, the ratio of the molar number of cobalt to the molar number of nickel at a grain boundary, which is an interface between the grains, is C2, and the ratio of the molar number of cobalt to the molar number of nickel in the coating layer is C3, C1 < C2 < C3 is satisfied.

## Description

### TECHNICAL FIELD

The present invention relates to a positive electrode active material, a preparation method thereof, and a positive electrode and a lithium secondary battery including the positive electrode active material, and more specifically, to a positive electrode active material having a small amount of gas generation at high temperatures and being capable of implementing excellent high-temperature lifespan properties, a preparation method thereof, and a positive electrode and a lithium secondary battery both including the positive electrode active material.

### BACKGROUND ART

In recent years, as the technology development and demand for mobile devices and electric vehicles have increased, the demand for secondary batteries as an energy source has been rapidly increased. Among such secondary batteries, lithium secondary batteries having high energy density and voltage, long cycle life, and low self-discharging rate have been commercialized and widely used.

As a positive electrode active material for a lithium secondary battery, lithium transition metal oxides such as a lithium cobalt oxide such as LiCoO₂, a lithium nickel oxide such as LiNiO₂, a lithium manganese oxide such as LiMnO₂ or LiMn₂O₄, a lithium iron phosphate oxide such as LiFePO₄, and the like have been developed, and in recent years, a lithium composite transition metal oxide including two or more types of transition metals such as Li[NiₐCo_{b}Mn_{c}]O₂, Li[NiₐCo_{b}Al_{c}]O₂, and Li[NiₐCo_{b}Mn_{c}Al_{d}]O₂, and the like have been developed and used.

Among these, the lithium composite transition metal oxide including two or more transition metals is typically produced in a spherical secondary particle form in which tens to hundreds of primary particles are aggregated, and depending on the orientation form of a primary particle or the shape(aspect ratio) of a primary particle, physical properties, such as mobility of lithium ions or electrolyte solution wetting properties, vary. Accordingly, studies have been conducted to control the particle structure of positive electrode active material particles to improve the performance of a positive electrode active material.

Korean Patent Registration No. 10-1611784 (Patent Document 1) discloses a positive electrode active material in which the length of a primary particle in an a-axis direction is longer than the length thereof in a c-axis direction, and an a-axis orientation of the primary particle is toward the center of the secondary particle, wherein the particles grow in a predetermined path while being adjacent to each other.

In the case of a positive electrode active material in which primary particles are arranged radially toward the center of a secondary particle as described above, the lithium movement path in the secondary particle is shortened, thereby achieving effects of facilitating intercalation and de-intercalation of lithium ions and reducing electrical resistance. However, compared to a positive electrode active material in which primary particles are arranged without orientation, a positive electrode active material in which primary particles are arranged radially is easy to break during roll-pressing, and as a result, there is a problem in that side reactions with an electrolyte solution increase, which accelerates cell deterioration and increases gas generation. Particularly, the above-described problem is particularly prominent upon high temperature exposure.

### DISCLOSURE OF THE INVENTION

### TECHNICAL PROBLEM

The present invention is to solve the above-described problem, and is to provide a positive electrode active material and a preparation method thereof, wherein at least a portion of a secondary particle includes an oriented structure in which the long axis of a grain is arranged in a direction from the center of the secondary particle toward the surface thereof, so that lithium mobility and resistance properties are excellent, and the Co/Ni molar ratio is formed to increase in the order of the inside of a grain, the interface between grains (grain boundary), and a coating layer on the surface of the secondary particle, so that excellent lifespan properties and gas generation properties may be implemented even during exposure to high temperatures.

In addition, the present invention is to provide a positive electrode and a lithium secondary battery including the positive electrode active material described above.

### TECHNICAL SOLUTION

According to one embodiment, the present invention provides a positive electrode active material including a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle, and a coating layer formed on the surface of the secondary particle and including a Co element, wherein the lithium composite transition metal oxide contains nickel and cobalt, and when the ratio of the molar number of cobalt to the molar number of nickel in the grain is C1, the ratio of the molar number of cobalt to the molar number of nickel at a grain boundary, which is the interface between the grains, is C2, and the ratio of the molar number of cobalt to the molar number of nickel in the coating layer is C3, the positive electrode active material satisfies C1 < C2 < C3.

According to another embodiment, the present invention provides a method for preparing a positive electrode active material, the method including preparing a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle, a first coating step of mixing the lithium composite transition metal oxide with a coating solution containing a cobalt element and then performing a first heat treatment thereon, and a second coating step of dry-mixing the lithium composite transition metal oxide and the coating material containing a Co element, which were subjected to the first coating, and then performing a second heat treatment thereon.

According to yet another embodiment, the present invention provides a positive electrode including the positive electrode active material according to the present invention, and a lithium secondary battery including the positive electrode.

### ADVANTAGEOUS EFFECTS

The positive electrode active material according to the present invention includes an oriented structure in which the long axes of grains are arranged from the center of a secondary particle toward the surface thereof, so that the lithium diffusion path inside the particle is short, and as a result, excellent lithium mobility and resistance properties may be implemented.

In addition, the positive electrode active material according to the present invention is formed such that the Co/Ni mole ratio increases in the order of the inside of a grain, the grain boundary, which is the interface between grains, and a coating layer on the surface of the secondary particle, so that even if particles break due to roll-pressing, side reactions with an electrolyte solution may be reduced to the minimum, and accordingly, the positive electrode active material may implement excellent high-temperature properties compared to a positive electrode active material having a typical oriented structure.

In the positive electrode active material according to the present invention, a lithium composite transition metal oxide having an oriented structure is wet-coated using a Co-containing coating solution, then mixed with a Co coating material to be dry-coated to allow the Co/Ni molar ratio to increase in the order of inside the grain of the positive electrode active material, the grain boundary, and a coating layer on the surface of the secondary particle.

### BRIEF DESCRIPTION OF THE DRAWINGS

FIG. 1 is a SEM photograph of a cross-section of a lithium composite transition metal oxide manufactured according to Preparation Example 1.
FIG. 2 is a SEM photograph of a cross-section of a lithium composite transition metal oxide manufactured according to Preparation Example 2.

### MDOE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, the term 'grain' means the smallest particle unit that is distinguished as a single mass in which grain boundaries do not exist in appearance when observed in a range of vision of 5,000 times to 20,000 times using a scanning electron microscope, and the grain may be composed of a single crystallite or a plurality of crystallites. In the present invention, the average particle diameter of the grain may be measured by a method of measuring the size of each particle distinguished in cross-sectional SEM data of positive electrode active material particles, and obtaining an arithmetic mean value thereof.

In the present invention, a 'secondary particle' means a secondary structural body formed by the aggregation of a plurality of grains.

In the present invention, the term 'D₅₀' refers to a particle size based on 50% of a volume cumulative particle size distribution of positive electrode active material powder. The D₅₀ may be measured by a laser diffraction method. For example, the D₅₀ may be measured by dispersing positive electrode active material powder in a dispersion medium, and then introducing the mixture into a commercially available laser diffraction particle size measurement device (e.g., Microtrac MT 3000) to be irradiated with an ultrasonic wave of about 28 kHz to an output of 60W, thereby obtaining a volume cumulative particle size distribution graph, and then obtaining a particle size corresponding to 50% of a volume cumulative amount.

In the present invention, 'oriented structure' refers to a structure in which the long axis of a grain is arranged in a direction from the center of a secondary particle toward the surface thereof. At this time, 'the long axis of a grain is arranged in a direction from the center of a secondary particle toward the surface thereof' means that an angle formed between the shortest line connecting between the center of the secondary particle and the surface thereof while passing through the corresponding grain and the long axis of the grain is in the range of -15° to 15°.

In the present invention, 'aspect ratio of a grain' refers to the ratio of the length of a long axis of a grain to the length of a short length of the grain, and 'average aspect ratio' refers to an arithmetic mean value of the aspect ratio of grains in the corresponding region.

Hereinafter, the present invention will be described in detail.

### <Positive electrode active material>

A positive electrode active material according to the present invention includes (1) a lithium composite transition metal oxide, and (2) a coating layer formed on the surface of a secondary particle of the lithium composite transition metal oxide, and including a Co element.

The lithium composite transition metal is in the form of a secondary particle in which a plurality of grains are aggregated, and includes an oriented structure in which a long axis of the grain is arranged in a direction from the center of the secondary particle toward the surface thereof in at least one portion of the secondary particle. At this time, 'the long axis of a grain is arranged in a direction from the center of a secondary particle toward the surface thereof' means that an angle formed between the shortest line connecting between the center of the secondary particle and the surface thereof while passing through the corresponding grain and the long axis of the grain is in the range of -15° to 15°. The long axis of the grain refers to a line segment having the longest length among straight lines connecting two points on the surface of the grain while passing through the center of the corresponding grain. The interface between a grain and a grain in the secondary particles of the positive electrode active material becomes a diffusion path for lithium ions. If the grains are arranged in a direction from the center of the secondary particle toward the surface thereof, the diffusion path of lithium ions inside the secondary particle is shortened, thereby increasing lithium mobility, and as a result, there may be an effect of improving output and/ resistance properties.

Meanwhile, grains in which the long axes are arranged in a direction from the center of the secondary particle toward the surface thereof may form an angle of -15° to 15°, preferably -10° to 10° between the long axis and an a-axis direction of the crystal structure. Since lithium ions move in the a-axis direction within the grain, when the long axis of the grain and the a-axis direction of the crystal structure form an angle of -15° to 15°, intercalation and de-intercalation of lithium ions are facilitated, and as a result, there may be an effect of improving output and/ resistance properties.

Meanwhile, the grains in which the long axes are arranged in a direction from the center of the secondary particle toward the surface thereof may have an aspect ratio of 1.5 to 15, preferably 2 to 15, and more preferably 4 to 15. If the aspect ratio of the grains satisfies the above-described ranges, the contraction and expansion of the grains during charging and discharging occur mainly in the uniaxial direction, which is a direction perpendicular to the direction in which the grains are arranged, thereby minimizing the occurrence of cracks caused by non-uniform contraction and expansion of the grains.

Meanwhile, the lithium composite transition metal oxide may have, but is not limited to, a core-shell structure including a core portion in which grains are aggregated without any particular orientation, and a shell portion in which the long axes of the grains are arranged in a direction from the center of the secondary particle toward the surface thereof.

The core portion is a region in which grains are disorderly aggregated without any particular orientation, and is formed in the center of the secondary particle. The core portion may be a portion formed as a seed during a co-precipitation reaction for forming a precursor for a positive electrode active material, and may be, for example, a region at a distance of 1/3R from the center of the secondary particle, or a region at a distance of 1/4R from the center of the secondary particle, if the half-diameter of the secondary particle from the center of the secondary particle is set to R.

The grains in the core portion may have a shape close to a spherical shape, and may have an aspect ratio of 0.7 to 1.3, preferably 0.8 to 1.2.

Next, the shell portion is formed on the outer side of the core portion, and the grain is arranged in an oriented structure. The shell portion may be a portion formed by the growth of particles during a co-precipitation reaction for forming a precursor for a positive electrode active material, and may be, for example, a region at a distance of 1/3R to R of the secondary particle, or a region at a distance of 1/4R to R of secondary particle, if the half-diameter of the secondary particle from the center of the secondary particle is set to R.

The grains in the shell portion may have a rod shape, and may preferably have an aspect ratio of 2 to 15,and more preferably 4 to 15.

Meanwhile, in the positive electrode active material of the present invention, the average particle diameter of grains may be 0.05 µm to 4 µm, preferably 0.1 µm to 3 µm, and more preferably 0.1 µm to 2 µm. If the average particle diameter of the grains is too large, a rock salt phase is formed so that resistance properties and lifespan properties may be deteriorated, and if the average particle diameter of the grains is too small, the contact area with the electrolyte solution increases, which may cause rapid deterioration.

The lithium composite transition metal oxide contains nickel and cobalt, and may have, for example, a composition represented by [Formula 1] below.

[Formula 1] Liₓ[NiₐCo_{b}M¹_{c}M²_{d}]O_{2-y}A_{y}

In [Formula 1] above, the M¹ may be one or more elements selected from the group consisting of Mn and Al, and for example, may be Mn or a combination of Mn and Al.

The M² may be one or more elements selected from the group consisting of W, Cu, Fe, V, Cr, Ti, Zr, Zn, Ta, Y, In, La, Sr, Ga, Sc, Gd, Sm, Ca, Ce, Nb, Mg, B, and Mo.

In addition, the A may be one or more elements selected from the group consisting of F, Cl, Br, I, At, and S.

The x represents the ratio of the molar number of Li to the total molar number of transition metals, and may be 0.98≤x≤1.20, preferably 0.99≤x≤1.10, and more preferably 1.0≤x≤1.10.

The a represents the ratio of the molar number of Ni to the total molar number of all metals excluding lithium, and may be 0<a<1, preferably 0.3≤a<1, more preferably 0.6≤a<1, even more preferably 0.8≤a<1, and yet even more preferably 0.85≤a<1.

The b represents the ratio of the molar number of Co to the total molar number of all metals excluding lithium, and may be 0<b<1, preferably 0<b<0.7, more preferably 0<b<0.4, even more preferably 0<b<0.2, and yet even more preferably 0<b≤0.1.

The c represents the ratio of the molar number of M¹ to the total molar number of all metals excluding lithium, and may be 0<c<1, preferably 0<c<0.7, more preferably 0<c<0.4, even more preferably 0<c<0.2, and yet even more preferably 0<c≤0.1.

The d represents the ratio of the molar number of M² to the total molar number of all metals excluding lithium, and may be 0≤d≤0.2, preferably 0≤d≤0.15, and more preferably 0≤d≤0.10.

The y represents the molar ratio of the A element substituted at the oxygen site, and may be 0≤y≤0.2, preferably 0≤y≤0.15, and more preferably 0≤y≤0.10.

Meanwhile, the lithium composite transition metal oxide includes a coating layer including a Co element on at least a portion of the surface of the secondary particle. If a coating layer is formed on the surface of the lithium composite transition metal oxide, the contact between the lithium composite transition metal oxide and an electrolyte is suppressed by the coating layer, thereby reducing side reactions with an electrolyte solution, and as a result, there may be an effect of improving lifespan properties. Particularly, if the Co element is included in the coating layer, the effect of reducing the initial resistance is more excellent than when other coating elements are included.

The shape or area of the coating layer is not particularly limited. For example, the coating layer may be in the form of a continuous film surrounding the entire surface of the secondary particle, or may be in the form of particles discontinuously distributed on the surface of the secondary particle. In addition, the area of a region in which the coating layer is formed may be 10% to 100%, 10% to 80%, or 20% to 70% based on the total surface area of the secondary particle.

The coating layer may be an oxide containing lithium and cobalt, and may have, for example, a composition represented by [Formula 2] below.

[Formula 2] Li_{z}Co_{1-w}M³_{w}O₂

In [Formula 2] above, the M³ may be one or more selected from the group consisting of Ni, Mn, Al, W, Cu, Fe, V, Cr, Ti, Zr, Zn, Ta, Y, In, La, Sr, Ga, Sc, Gd, Sm, Ca, Ce, Nb, Mg, B, and Mo, and it may be that 0.8≤z≤1.2, and 0≤w≤0.2. Preferably, the M3 may be one or more selected from the group consisting of Ni, Mn, Al, Ti, Zr, and Mg, and it may be that 0.8≤z≤1.1 and 0≤w≤0.1.

When the coating layer satisfies the above-described compositions, there may be an effect of improving initial resistance properties and high-temperature lifespan.

Meanwhile, when the ratio of the molar number of cobalt to the molar number of nickel in the grain is C1, the ratio of the molar number of cobalt to the molar number of nickel at a grain boundary, which is the interface between grains, is C2, and the ratio of the molar number of cobalt to the molar number of nickel in the coating layer is C3, the positive electrode active material according to the present invention satisfies C1 < C2 < C3. If the Co/Ni molar ratio is higher at a grain boundary than inside a grain as in the present invention, there may be an effect of improving the particle strength by Co present at the grain boundary, and as a result, particle breakage caused by roll-pressing is suppressed. In addition, in the case of a secondary particle in which grains are arranged with orientation as in the present invention, side reactions with an electrolyte solution and surface deterioration occur more frequently on the surface of the secondary particle compared to a secondary particle without grain orientation, but if the Co/Ni molar ratio is formed high on the surface as in the present invention, there may be an effect of reducing side reactions with an electrolyte solution and deterioration on the surface of a secondary particle. That is, if the Co/Ni molar ratio satisfies the above-described conditions, particle breakage and side reactions with an electrolyte on the surface of the secondary particle may be reduced to the minimum, and as a result, excellent high-temperature properties may be implemented compared to a positive electrode active material having a typical oriented structure. The D₅₀ of the positive electrode active material may be 2 µm to 25 µm, preferably 2 µm to 20 µm, and more preferably 4 µm to 18 µm.

If the D₅₀ of the positive electrode active material satisfies the above-described ranges, it is possible to prevent positive active material particles from breaking during a roll-pressing process or processibility from degrading during slurry preparation.

<Method for preparing positive electrode active material>

Next, a method for preparing a positive electrode active material according to the present invention will be described.

The method for preparing a positive electrode active material according to the present invention includes (1) preparing a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle, (2) a first coating step of mixing the lithium composite transition metal oxide with a coating solution containing a cobalt element and then performing a first heat treatment thereon, and (3) a second coating step of dry-mixing the lithium composite transition metal oxide and the coating material containing a cobalt element, which were subjected to the first coating, and then performing a second heat treatment thereon.

### (1) Step of preparing lithium composite transition metal oxide

First, a lithium composite transition metal oxide including an oriented structure in which a long axis of the grain is arranged in a direction from the center of the secondary particle toward the surface thereof in at least one portion of the secondary particle is prepared. The specific specifications of the lithium composite transition metal oxide are the same as described above.

The lithium composite transition metal oxide including an oriented structure as described above may be prepared by purchasing a commercially available product, or may be prepared using a method known in the art for preparing a lithium composite transition metal oxide.

For example, the lithium composite transition metal oxide may prepared by injecting a metal solution containing nickel and cobalt elements, an ammonium cation complex forming agent, and a basic compound into a reactor and performing a co-precipitation reaction to prepare a precursor for a positive electrode active material, and then mixing the precursor for a positive electrode active material with a lithium raw material, followed by firing the mixture.

The metal solution may be prepared by dissolving a nickel raw material and a cobalt raw material in a solvent such as water. The nickel raw material may be an acetate, carbonate, nitrate, sulfate, halide, sulfide, oxide, or the like of nickel, and specifically, NiO, NiCO₃·2Ni(OH)₂·4H₂O, NiC₂O₂·2H₂O, Ni(NO₃)₂·6H₂O, NiSO₄, NiSO₄·6H₂O, nickel halide, or a combination thereof, but is not limited thereto. The cobalt raw material may be an acetate, carbonate, nitrate, sulfate, halide, sulfide, oxide, or the like of a cobalt metal, and specifically CoSO₄, Co(OCOCH₃)₂·4H₂O, Co(NO₃)₂·6H₂O, CoSO₄·7H₂O, or a combination thereof, but is not limited thereto.

the ammonium cation complex forming agent may be at least one selected from the group consisting of NH₄OH, (NH₄)₂SO₄, NH₄NO₃, NH₄Cl, CH₃COONH₄, and NH₄CO₃, and the compound may be introduced into a reactor in the form of a solution in which the compound is dissolved in a solvent. At this time, the solvent may be water, or a mixture of an organic solvent (for example, an alcohol, etc.) which may be uniformly mixed with water and water.

In addition, the basic compound may be at least one selected from the group consisting of NaOH, KOH, and Ca(OH)₂, and the compound may be introduced into a reactor in the form of a solution in which the compound is dissolved in a solvent. At this time, the solvent may be water, or a mixture of an organic solvent (for example, an alcohol, etc.) which may be uniformly mixed with water and water.

Meanwhile, in order to prepare a positive electrode active material having an oriented structure as in the present invention, a precursor for a positive electrode active material having an oriented structure in which primary particles are arranged in a direction from the center of a secondary particle toward the surface thereof is required to be used. The aggregation form of primary particles of the precursor for a positive electrode active material is affected by the pH, stirring rate, reaction temperature, etc. during the co-precipitation reaction. Therefore, when preparing the precursor for a positive electrode active material, the pH, stirring rate, reaction temperature, etc. may be suitably adjusted to form a precursor for a positive electrode active material having an oriented structure, and by using the precursor, it is possible to prepare a lithium composite transition metal oxide having an oriented structure.

Meanwhile, when preparing the lithium composite transition metal oxide of the present invention, the M¹ element and the M² element may be introduced in the co-precipitation reaction step for preparing the precursor for a positive electrode active material, or may be introduced during the mixing a lithium raw material. In addition, when two or more types of elements are used as the M¹ element and the M² element, the introduction timing of each of the M¹ element and the M² element may be the same or different. For example, when Mn and Al are included as the M¹ element, Mn may be introduced in the precursor co-precipitation step, and Al may be introduced in the mixing step with a lithium raw material.

The introduction timing of the M¹ element and the M² element may be suitably adjusted in consideration of a final composition of a positive electrode active material to be prepared. For example, in the case of preparing a positive electrode active material having a Ni content of 80 atm% or greater, it is more preferable that an Al element is introduced in the mixing step with a lithium raw material rather than during the co-precipitation reaction. This is because the introduction of Al in the co-precipitation step may adversely affect the growth of a crystal structure.

The lithium raw material and the positive electrode active material precursor may be mixed such that the molar ratio of Li : all transition metals in the precursor is 1 : 1 to 1.2 : 1, preferably 1 : 1 to 1.1 : 1. If the mixing ratio of the lithium raw material and the transition metals in the positive electrode active material precursor satisfies the above-described ranges, the crystal structure of a positive electrode active material is well developed, so that a positive electrode active material having excellent capacity properties and structural stability may be prepared.

The lithium raw material may be, for example, a carbonate (for example, lithium carbonate and the like), a hydrate (for example, lithium hydroxide hydrate (LiOH·H₂O) and the like), a hydroxide (for example, lithium hydroxide and the like), a nitrate (for example, lithium nitrate (LiNO₃) and the like) and a chloride (for example, lithium chloride (LiCl) and the like), and the like, all containing lithium, and any one thereof or a mixture of two or more thereof may be used.

The firing may be performed at a suitable temperature in consideration of the composition of the lithium composite transition metal oxide, and may be performed, for example, at 600 °C to 1000 °C, preferably 700 °C to 900 °C. The firing time may be, for example, 5 hours to 30 hours, preferably 8 hours to 15 hours, but is not limited thereto.

### (2) First coating step

When the lithium composite transition metal oxide including an oriented structure is prepared, a first coating step of mixing the lithium composite transition metal oxide with a coating solution containing a cobalt element and then performing a first heat treatment thereon is performed.

The coating solution containing a cobalt element may be prepared by dissolving one or more selected from the group consisting of CoNO₃, Co(NO₃)₂·6H₂O, CoCl₂, CoSO₄, Co(OCOCH₃)₂·4H₂O, and Co(OH)₂ in a solvent, such as water, ethanol, and the like.

When the first coating is performed through a wet coating method in which the coating solution and the lithium composite transition metal oxide are mixed and then heat-treated as described above, the cobalt element contained in the coating solution penetrates not only the surface of the secondary particle of the lithium composite transition metal oxide but also the interface (grain boundary) between grains, so that the cobalt concentration at the grain boundary may be formed to be higher than that inside the grain.

Meanwhile, the first heat-treatment may be performed at 300 °C to 800 °C, preferably 400 °C to 700 °C, and more preferably 500 °C to 650 °C. When the first heat-treatment temperature satisfies the above-described ranges, the cobalt element contained in the coating solution is concentrated at the grain boundary, so that the ratio of the number of moles of cobalt to the number of moles of nickel at the grain boundary may be formed to be higher than inside the grain. If the first heat-treatment temperature is too low, coating is facilitated, and if the first heat-treatment temperature is too high, cobalt diffuses into the grain and is not concentrated at the grain boundary.

### (3) Second coating step

Next, a second coating step of dry-mixing the lithium composite transition metal oxide and the coating material containing a Co element, which were subjected to the first coating, and then performing a second heat treatment thereon is performed.

The coating raw material containing a cobalt element may be one or more selected from the group consisting of Co(OH)₂, CoO, Co₂O₃, Co₃O₄, CoO(OH), and Co(OCOCH₃)₂.

If the coating is performed in a dry manner as described above, unlike the wet coating, the cobalt element penetrates less into the interface between grains and remains on the surface of the secondary particle, thereby contributing to the formation of a coating layer on the surface of the secondary particle. Therefore, the cobalt element introduced during the first coating and the cobalt element introduced during the second coating accumulate on the surface of the secondary particle, and as a result, the ratio of the number of moles of cobalt to the number of moles of nickel becomes higher on the surface of the secondary particle than at the grain boundary.

Meanwhile, the second heat-treatment step may be performed at 300 °C to 800 °C, preferably 400 °C to 700 °C, and more preferably 500 °C to 700 °C. If the second heat-treatment temperature satisfies the above-described ranges, the cobalt concentration on the surface of the secondary particle may be formed to be higher than that on the grain boundary. If the second heat-treatment temperature is too low, coating is not facilitated, and if the second heat-treatment temperature is too high, cobalt diffuses into the grain boundary and/or grains, so that it is difficult to form a high cobalt concentration on the surface of the secondary particle.

### <Positive electrode>

Next, a positive electrode according to the present invention will be described.

The positive electrode includes the positive electrode active material according to the present invention. Specifically, the positive electrode includes a positive electrode current collector, and a positive electrode active material layer formed on the positive electrode current collector, wherein the positive electrode active material layer includes the positive electrode active material according to the present invention.

At this time, since the positive electrode active material is the same as that described above, a detailed description thereof will be omitted, and hereinafter, only the rest of the components will be described in detail.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 µm to 500 µm, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

The positive electrode active material layer may selectively include, if necessary, a conductive material, a binder, and the like a binder, in addition to the positive electrode active material.

At this time, the positive electrode active material may be included in an amount of 80 wt% to 99 wt%, more specifically 85 wt% to 98.5 wt%, based on the total weight of the positive electrode active material layer. When included in the above content range, excellent capacity properties may be exhibited.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.1 wt% to 15 wt% based on the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 0.1 wt% to 15 wt% based on the total weight of the positive electrode active material layer.

The positive electrode may be manufactured according to a typical method for manufacturing a positive electrode except that the positive electrode active material described above is used. Specifically, the positive electrode may be manufactured by applying a positive electrode slurry composition, which is prepared by dissolving or dispersing the positive electrode active material described above and selectively, if necessary, a binder, a conductive material, and a dispersant in a solvent, on a positive electrode current collector, followed by drying and roll-pressing.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent dissolves or disperses the positive electrode active material, the conductive material, the binder, and the dispersant in consideration of the coating thickness of a slurry, and a manufacturing yield, and thereafter, allows the slurry to have a viscosity capable of exhibiting excellent thickness uniformity when applied for manufacturing the positive electrode.

In addition, in another method, the positive electrode may also be manufactured by casting the positive electrode slurry composition on a separate support, and then laminating a film obtained by being peeled off from the support on a positive electrode current collector.

### <Electrochemical device>

The present invention may manufacture an electrochemical device including the positive electrode. Specifically, the electrochemical device may be a battery, a capacitor, or the like, and more specifically, may be a lithium secondary battery.

Specifically, the lithium secondary battery may include a positive electrode, a negative electrode disposed facing the positive electrode, a separator interposed between the positive electrode and the negative electrode, and an electrolyte. Since the positive electrode is the same as that described above, a detailed description thereof will be omitted, and hereinafter, only the rest of the components will be described in detail.

Also, the lithium secondary battery may selectively further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide which may be doped and undoped with lithium, such as SiOβ(0 <β< 2), SnO₂, a vanadium oxide, or a lithium vanadium oxide; or a composite including the metallic compound and the carbonaceous material, such as an Si-C composite or an Sn-C composite, and any one thereof or a mixture of two or more thereof may be used. In addition, a metal lithium thin film may be used as the negative electrode active material. In addition, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The negative electrode active material may be included in an amount of 80 wt% to 99 wt% based on the total weight of the negative electrode active material layer.

The binder is a component for assisting in bonding between a conductive material, an active material, and a current collector, and is typically added in an amount of 0.1 wt% to 10 wt% based on the total weight of a negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less, based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

As an example, the negative electrode active material layer may be prepared by applying a negative electrode slurry composition, which is prepared by dissolving or dispersing a negative electrode active material and selectively a binder and a conductive material in a solvent, on a negative electrode current collector, followed by drying, or may be prepared by casting the negative electrode slurry composition on a separate support, and then laminating a film peeled off from the support on a negative electrode current collector.

Meanwhile, in the above-described lithium secondary battery, the separator is to separate the negative electrode and the positive electrode and to provide a movement path for lithium ions, and any separator typically used as a separator in a lithium secondary battery may be used without particular limitation, and in particular, a separator having high moisture-retention capability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. Also, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched, or cyclic hydrocarbon group having 2 to 20 carbon atoms, and may include a double-bond aromatic ring or an ether bond); amides such as dimethylformamide; dioxolanes such as 1,3-dioxolane; sulfolanes, or the like may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 2.0 M. If the concentration of the lithium salt is included in the above-described range, the electrolyte has suitable conductivity and viscosity, and thus, may exhibit excellent electrolyte performance, and lithium ions may effectively move.

As described above, the lithium secondary battery including the positive electrode active material according to the present invention exhibits excellent capacity properties and lifespan properties, and may be usefully used in various fields such as portable devices, such as mobile phones, laptop computers, and digital cameras, and electric vehicles.

Hereinafter, the present invention will be described in more detail with reference to embodiments. However, the embodiments according to the present invention may be modified into other various forms, and the scope of the present invention should not be construed as being limited to the embodiments described below. The embodiments of the present invention are provided to more fully describe the present invention to those skilled in the art.

### Preparation Example 1 - Preparation of lithium transition metal oxide with orientation

NiSO₄, CoSO₄, and MnSO₄ were mixed in distilled water in an amount such that the molar ratio of nickel : cobalt : manganese was to be 8 : 1 : 1 to prepare a transition metal aqueous solution.

Subsequently, deionized water was added to the reactor, and then nitrogen gas was purged into the reactor to remove dissolved oxygen in the water, and NaOH was introduced to maintain a pH of 11 in the reactor.

Thereafter, a transition metal aqueous solution, a NaOH aqueous solution, and a NH₄OH aqueous solution were introduced to the reactor to perform a co-precipitation reaction for 30 hours under the conditions of a reaction temperature of 50 °C, a pH of 11, and a stirring rate of 400 rpm so as to prepare Ni_{0.8}Co_{0.1}Mn_{0.1}(OH)₂, which is a precursor for a positive electrode active material with an average particle diameter (D₅₀) of 12 µm. At this time, the molar ratio of the transition metal ions and NH₄OH was 1 : 1.10.

The precursor for a positive electrode active material and LiOH were mixed such that the molar ratio of Li : transition metal (Ni+Co+Mn) was to be 1.02 : 1, and then fired at 730 °C for 20 hours, washed with water, and dried to prepare a lithium composite transition metal oxide.

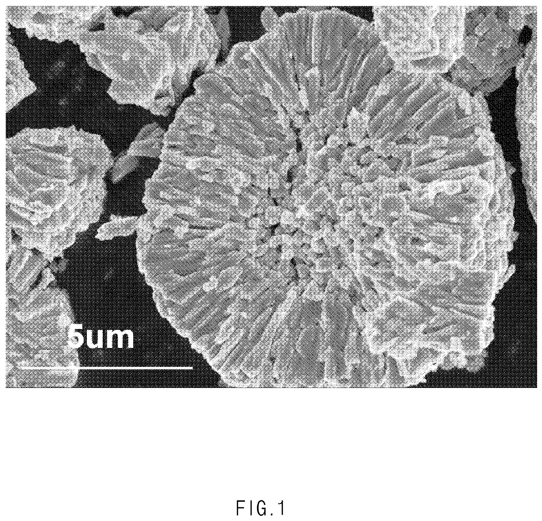

In FIG. 1, a scanning electron microscope (SEM) image measuring the cross-section of the lithium composite transition metal oxide prepared as described above was illustrated. Through FIG. 1, it can be seen that the lithium composite transition metal oxide prepared by the above-described method was in the form of a secondary particle in which a plurality of grains were aggregated, and that a long axis of the grain was arranged in a direction from the center of the secondary particle toward the surface thereof.

### Preparation Example 2 - Preparation of lithium transition metal oxide without orientation

A lithium composite transition metal oxide was prepared in the same manner as in Preparation Example 1, except that in the preparation of a precursor for a positive electrode active material, a transition metal aqueous solution, a NaOH aqueous solution, and a NH₄OH aqueous solution were introduced such that the molar ratio of a transition metal and NH₄OH was to be 1 : 0.8, a co-precipitation reaction was performed under the conditions of a reaction temperature 60 °C, a pH of 11, and a stirring rate of 300 rpm, and firing was performed at 750°C.

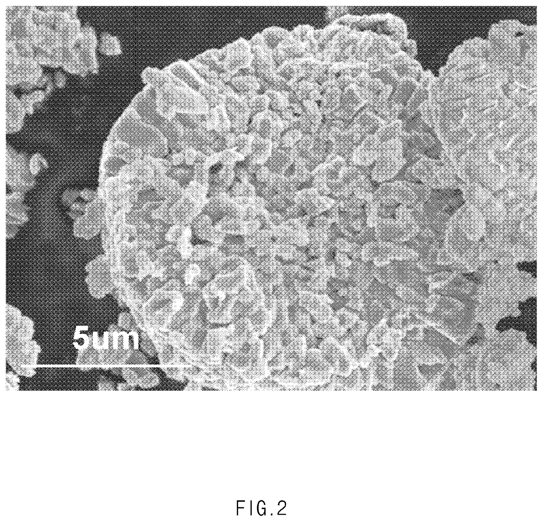

In FIG. 2, a scanning electron microscope (SEM) image measuring the cross-section of the lithium composite transition metal oxide prepared as described above was illustrated. Through FIG. 2, it can be seen that the lithium composite transition metal oxide prepared by the above-described method was in the form of a secondary particle in which a plurality of grains were aggregated, and that the grains were arranged in a disorderly manner without any particular orientation.

### Example

Co(NO₃)₂·6H₂O was dissolved in deionized water (DI water) to prepare a Co-containing coating solution.

The lithium composite transition metal oxide prepared by Preparation Example 1 was introduced to the coating solution, stirred at 500 rpm for 3 hours, and then first heat treatment was performed thereon at 600 °C (first coating step).

Next, the lithium composite transition metal oxide and Co(OH)₂ were dry-mixed at a weight ratio of 1 : 0.002, and then second heat treatment was performed thereon at 680 °C (second coating step) to prepare a positive electrode active material.

### Comparative Example 1

A positive electrode active material was prepared in the same manner as in Example 1, except that the lithium composite transition metal oxide prepared in Preparation Example 2 was used instead of the lithium composite transition metal oxide prepared in Preparation Example 1.

### Comparative Example 2

A positive electrode active material was prepared in the same manner as in Example 1, except that only the first coating step was performed, and the second coating step was not performed.

### Comparative Example 3

A positive electrode active material was prepared in the same manner as in Example 1, except that only the second coating step was performed, and the first coating step was not performed.

### Comparative Example 4

The lithium composite transition metal oxide prepared by Preparation Example 1 and Co(OH)₂ were dry-mixed at a weight ratio of 1 : 0.002, and heat treatment was performed thereon at 680 °C to form a coating layer.

Thereafter, Co(NO₃)₂·6H₂O was dissolved in deionized water (DI water) to prepare a Co-containing coating solution, and the lithium composite transition metal oxide having the coating layer formed thereon was introduced to the Co-containing coating solution, stirred at 500 rpm for 3 hours, and then heat-treated at 600 °C to prepare a positive electrode active material.

### Experimental Example 1: Co concentration measurement

Energy Dispersive X-ray Spectroscopy (EDX) was used to measure the Co/Ni molar ratio inside the grain, at the grain boundary, and on the surface of the secondary particle of the positive electrode active material prepared in each of Example and Comparative Examples 1 to 3 were measured. The measurement results are shown in Table 1 below.

### <Manufacturing of lithium secondary battery>

The positive electrode active material prepared in each of Example and Comparative Examples 1 to 4, a conductive material, (Denka black), and a binder (PVDF) were mixed at a weight ratio of 96 : 2 : 2 in N-methyl-2-pyrrolidone (NMP), which is a solvent, to prepare a positive electrode slurry. The positive electrode slurry was applied on one surface of an aluminum current collector, dried, and then roll-pressed to manufacture a positive electrode.

Next, a negative electrode active material (natural graphite), a conductive material (carbon black), and a binder (PVDF) were mixed at a weight ratio of 96 : 2 : 2 in N-methylpyrrolidone, which is a solvent, to prepare a negative electrode slurry. The negative electrode slurry composition was coated a copper current collector, dried, and then roll-pressed to manufacture a negative electrode.

A separator was interposed between the positive electrode and the negative electrode to manufacture an electrode assembly, and the electrode assembly was placed inside a battery case, followed by injecting an electrolyte solution thereto to manufacture a lithium secondary battery. At this time, as the electrolyte solution, an electrolyte solution in which 1 M of LiPF₆ was dissolved in an organic solvent in which ethylene carbonate : ethylmethyl carbonate were mixed at a volume ratio of 3 : 7 was used.

### Experimental Example 2: High-temperature lifespan properties

Each of the lithium secondary batteries manufactured as described above was charged to 4.2 V with a constant current of 1 C at 45°C, and then discharged to 2.5 V with a constant current of 0.5 C, which was set to one cycle, and 50 cycles of the charging and discharging were performed to measure a capacity retention rate. The measurement results are shown in [Table 1] below.

### Experimental Example 3: Gas generation during high-temperature storage

Each of the lithium secondary batteries manufactured as described above was charged to SOC 100, stored at 60°C for 8 weeks, and then punctured in a chamber in a vacuum atmosphere to discharge a gas inside the battery and collect the gas inside the vacuum chamber, and the gas in the chamber was analyzed for the amount of gas generation by using a Gas Chromatograph-Flame Ionizaiton detector (GC-FID). When the gas generation amount of the lithium secondary battery to which the positive electrode active material of Example was applied was set to 100%, the ratio of the gas generation amount of lithium secondary battery to which the positive electrode active material of each of Comparative Examples 1 to 3 was applied is shown in [Table 1] below.

### Experimental Example 4: Initial resistance

Each of the lithium secondary batteries manufactured as described above was charged to SOC 100, discharged for 10 seconds to measure an amount of voltage change, and the measured amount of voltage change was divided by a discharge current to measure an initial resistance value. The measurement results are shown in [Table 1] below.

**[Table 1]**

| | Co/Ni molar ratio inside grain | Co/Ni molar ratio of grain boundar y | Co/Ni molar ratio coating layer | Capacity retenti on rate (%) | Gas generat ion amount (%) | Initial resista nce (Ω) |
|---|---|---|---|---|---|---|
| Examples | 0.125 | 0.7 | 0.98 | 95 | 100 | 8.5 |
| Comparative Example 1 | 0.125 | 0.7 | 0.98 | 91 | 240 | 12.5 |
| Comparative Example 2 | 0.125 | 0.125 | 0.125 | 93 | 200 | 8.4 |
| Comparative Example 3 | 0.125 | 0.125 | 0.98 | 91 | 170 | 8.5 |
| Comparative Example 4 | 0.125 | 0.85 | 0.8 | 94 | 110 | 11.8 |

As shown in Table 1 above, the positive electrode active materials of Example and Comparative Example 1 prepared by sequentially performing wet coating and dry coating had a Co/Ni molar ratio increasing in the order of inside the grain, at the grain boundary, and on the surface of the secondary particle, whereas the positive electrode active material of Comparative Example 2 prepared by performing only the wet coating had the same level of Co/Ni molar ratio at the grain boundary and on the surface of the secondary particle, and the positive electrode active material in Comparative Example 3 prepared by performing only the dry coating had the same level of Co/Ni molar ratio at the grain boundary and inside the grain. Meanwhile, the positive electrode active material of Comparative Example 4 prepared by performing dry coating first and then wet coating, the Co/Ni molar ratio at the grain boundary was higher than the Co/Ni concentration in the coating layer.

In addition, through Table 1, it can be confirmed that the lithium secondary battery using the positive electrode active material of Example had excellent high-temperature lifespan properties and initial resistance properties compared to the lithium secondary batteries using the positive electrode active materials of Comparative Examples 1 to 4, and had less amount of gas generation after the high-temperature storage, thereby exhibiting excellent high-temperature properties.

## Claims

1. A positive electrode active material comprising: a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle; and a coating layer formed on the surface of the secondary particle and including a Co element, wherein:
the lithium composite transition metal oxide contains nickel and cobalt; and
when the ratio of the molar number of cobalt to the molar number of nickel in the grain is C1, the ratio of the molar number of cobalt to the molar number of nickel at a grain boundary, which is an interface between the grains, is C2, and the ratio of the molar number of cobalt to the molar number of nickel in the coating layer is C3, C1 < C2 < C3 is satisfied.

2. The positive electrode active material of claim 1, wherein grains in which the long axes are arranged in the direction from the center of the secondary particle toward the surface thereof form an angle of -15° to 15° between the long axis and an a-axis direction of the crystal structure.

3. The positive electrode active material of claim 1, wherein the grains in which the long axes are arranged in the direction from the center of the secondary particle toward the surface thereof have an aspect ratio of 1.5 to 15.

4. The positive electrode active material of claim 1, wherein the lithium composite transition metal oxide comprises:
a core portion in which grains are disorderly aggregated; and
a shell portion formed outside the core portion, and having grains arranged in an oriented structure.

5. The positive electrode active material of claim 4, wherein the grains in the core portion have an aspect ratio of 0.8 to 1.2.

6. The positive electrode active material of claim 4, wherein the grains in the shell portion have an aspect ratio of 1.5 to 15.

7. The positive electrode active material of claim 1, wherein the lithium composite transition metal oxide has a composition represented by [Formula 1] below:
[Formula 1] Liₓ[NiₐCo_{b}M¹_{c}M²_{d}]O_{2-y}A_{y}
wherein, in Formula 1 above,
the M¹ is one or more elements selected from the group consisting of Mn and Al,
the M² is one or more elements selected from the group consisting of W, Cu, Fe, V, Cr, Ti, Zr, Zn, Al, Ta, Y, In, La, Sr, Ga, Sc, Gd, Sm, Ca, Ce, Nb, Mg, B, and Mo,
the A is one or more elements selected from the group consisting of F, Cl, Br, I, At, and S, and
0.98≤x≤1.20, 0<a<1, 0<b<1, 0<c<1, 0≤d≤0.2, and 0≤y≤0.2.

8. The positive electrode active material of claim 1, wherein the coating layer has a composition represented by [Formula 2] below:
[Formula 2] Li_{z}Co_{1-w}M³_{w}O₂
wherein, in Formula 2 above, the M³ is one or more selected from the group consisting of Ni, Mn, Al, W, Cu, Fe, V, Cr, Ti, Zr, Zn, Ta, Y, In, La, Sr, Ga, Sc, Gd, Sm, Ca, Ce, Nb, Mg, B, and Mo, and 0.8≤z≤1.2, and 0≤w≤0.2.

9. The positive electrode active material of claim 1, wherein the average particle diameter of the grains is 0.05 µm to 4 µm.

10. The positive electrode active material of claim 1, wherein the D₅₀ of the positive electrode active material is 2 µm to 20 µm.

11. A method for preparing a positive electrode active material, the method comprising:
preparing a lithium composite transition metal oxide in the form of a secondary particle in which a plurality of grains are aggregated, and including an oriented structure in which a long axis of the grain is arranged in a direction from the center of the secondary particle toward the surface thereof in at least one portion of the secondary particle;
a first coating step of mixing the lithium composite transition metal oxide with a coating solution containing a cobalt element and then performing a first heat treatment thereon; and
a second coating step of dry-mixing the lithium composite transition metal oxide and the coating material containing a Co element, which were subjected to the first coating, and then performing a second heat treatment thereon.

12. The method of claim 11, wherein the coating solution containing a cobalt element is obtained by dissolving one or more selected from the group consisting of CoNO₃, Co(NO₃)₂ ·6H₂O, CoCl₂, CoSO₄, Co(OCOCH₃)₂·4H₂O, and Co(OH)₂ in water.

13. The method of claim 11, wherein the first heat treatment step is performed at 300 °C to 800 °C.

14. The method of claim 11, wherein a coating raw material containing the cobalt element is one or more selected from the group consisting of Co(OH)₂, CoO, Co₂O₃, Co₃O₄, CoO(OH), and Co(OCOCH₃)₂.

15. The method of claim 11, wherein the second heat treatment step is performed at 300 °C to 800 °C.

16. A positive electrode comprising the positive electrode active material of any one of claims 1 to 10.

17. A lithium secondary battery comprising the positive electrode of claim 16.
